# DEMANDE DE BREVET EUROPEEN

(11) **EP 2 085 713 A1**
(43) Date de publication de la demande: **05.08.2009**
(21) Numéro de dépôt: 09305049.0
(22) Date de dépôt: 20.01.2009
(51) Int. Cl.: F24H 4/04

(54) **Installation thermique pour le chauffage de l'eau**

(30) Priorité: 30.01.2008 FR 0800506
(71) Demandeur: Atlantic Industrie, 85000 La Roche sur Yon (FR)
(72) Inventeur: Merlet, Christian, 85140 Les Essarts (FR)
(74) Mandataire: Laget, Jean-Loup

(57) **Abrégé**

La présente invention concerne une installation thermique pour le chauffage de l'eau, notamment pour produire de l'eau chaude sanitaire, du type comportant une pompe (3) à chaleur, un évaporateur (4) et un condenseur (5) reliés entre eux pour former une boucle (2) thermique de génération de chaleur.

La boucle (2) thermique de génération de chaleur est une boucle (2) scellée, de manière à éviter tout risque de fuite ou de pollution du circuit de fluide calorique.

## Description

L'invention est relative à une installation thermique pour le chauffage de l'eau.

L'invention est particulièrement utile pour la production d'eau chaude sanitaire ou pour le chauffage de locaux par un ensemble de radiateurs à eau chaude.

On connaît des installations dites "géothermiques" de production d'eau chaude sanitaire comportant une cuve d'eau chauffée, un compresseur frigorifique utilisé en pompe à chaleur, un échangeur à surface lisse et un réseau de tubes d'évaporation enterrés dans un terrain constituant un puits de chaleur. Cependant, cette technologie "géothermique" présente plusieurs inconvénients : la pose de l'installation doit être effectuée par un spécialiste frigoriste pour relier les composants de l'installation en évitant les risques de pollution ou de fuite du fluide calorique ; une grande surface de terrain est nécessaire pour enfouir les tubes d'évaporation, et cette surface de terrain doit rester non utilisée pour les plantations ; enfin, cette technologie "géothermique" présente l'inconvénient majeur de l'impossibilité d'effectuer une maintenance en cas de fuites sans déterrer tout le réseau de tubes d'évaporation.

On connaît également des installations dites "aérothermiques" de production d'eau chaude sanitaire comportant une cuve d'eau chauffée, une pompe à chaleur, un condenseur et un évaporateur rectangulaire à surface lisse destiné à être fixé sur un mur, à l'extérieur d'un bâtiment, de préférence du côté sud. Cet évaporateur rectangulaire présente une surface de l'ordre de 1 à 2 mètre carré.

Cependant, cette technologie "aérothermique" présente également l'inconvénient de devoir recourir à un spécialiste frigoriste pour relier les composants de l'installation en évitant les risques de fuite ou de pollution du fluide calorique.

Un premier but de l'invention est de proposer une nouvelle installation thermique dont la pose et la mise en oeuvre ne nécessitent pas les compétences d'un spécialiste frigoriste.

Un deuxième but de l'invention est de proposer une nouvelle installation thermique, ergonomique et facile à installer par un artisan plombier ou électricien disposant d'un outillage ordinaire.

Un troisième but de l'invention est de proposer une nouvelle installation thermique dans laquelle le risque de fuite ou de pollution du fluide calorique est évité lors de la pose et de la mise en oeuvre.

L'invention a pour objet une installation thermique pour le chauffage de l'eau, notamment pour produire de l'eau chaude sanitaire, du type comportant une pompe à chaleur, un évaporateur et un condenseur reliés entre eux pour former une boucle thermique de génération de chaleur, caractérisée par le fait que la boucle thermique de génération de chaleur est une boucle scellée, sans aucune connexion démontable, de manière à éviter tout risque de fuite ou de pollution du circuit de fluide calorique.

Selon d'autres caractéristiques alternatives de l'invention :
- les éléments de la boucle thermique de génération de chaleur sont reliés entre eux par des soudures à l'argent, sans aucune connexion démontable ;
- l'évaporateur présente une conformation cylindrique allongée inscriptible dans un cylindre circulaire de 130 mm de diamètre ;
- la conformation cylindrique de l'évaporateur présente une section droite en forme d'étoile à plusieurs branches ;
- l'évaporateur est installé verticalement à l'extérieur d'un bâtiment, tandis que les autres éléments de la boucle thermique de génération de chaleur sont situés, au moins partiellement, à l'intérieur du bâtiment ; et les tubes conduisant le fluide calorique à travers un mur ou une paroi du bâtiment sont formés et enroulés en hélice extensible et déformable ;
- le condenseur est immergé à l'intérieur de la cuve ou réserve d'eau ;
- le condenseur est monté sur la bride ou porte de fermeture de la cuve de chauffe-eau ;
- chaque tube conduisant le fluide calorique et reliant la pompe à chaleur au condenseur est au moins en partie flexible ;
- la boucle thermique de génération de chaleur est conformée pour une mise en place au voisinage d'un passage de faible diamètre réalisé par trépanage dans un mur ;
- la boucle thermique de régulation comporte une pompe à chaleur installée en position basse à l'intérieur d'un bâtiment et reliée par un passage à travers le mur ou la paroi du bâtiment à un évaporateur, d'une part, et à un condenseur situé au-dessus de la pompe à chaleur, d'autre part.

L'invention sera mieux comprise grâce à la description qui va suivre donnée à titre d'exemple non limitatif en référence aux dessins annexés dans lesquels :
La figure 1 représente schématiquement une installation selon l'invention en élévation latérale après livraison et déballage ;
La figure 2 représente schématiquement une installation selon l'invention en élévation latérale dans une première étape de pose ;
La figure 3 représente schématiquement une installation selon l'invention en élévation latérale dans une deuxième étape de pose ;
La figure 4 représente schématiquement une installation selon l'invention en élévation latérale, en fin de pose.

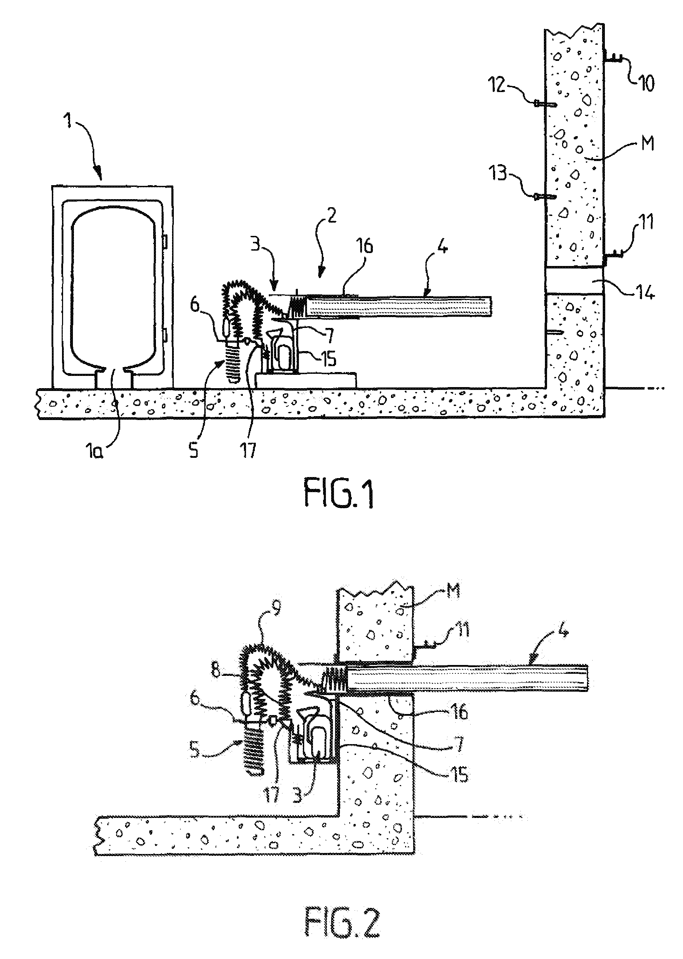

En référence aux figures 1 à 4, les éléments identiques ou fonctionnellement équivalents sont repérés par des chiffres de référence identiques.

Sur la figure 1, une installation selon l'invention comporte une cuve 1 de chauffe-eau et une boucle thermique 2 de génération de chaleur.

La cuve 1 de chauffe-eau présente une ouverture 1a destinée à être obturée par une bride ou une porte.

La boucle thermique 2 de génération de chaleur comporte une pompe à chaleur 3, un évaporateur 4, et un condenseur 5 monté sur une bride ou porte 6 d'obturation de l'ouverture 1a.

La pompe à chaleur 3 est reliée et scellée à l'évaporateur 4 par un tube 7 en cuivre recuit soudé à ses deux extrémités, de préférence par soudure à l'argent.

La pompe à chaleur 3 est reliée et scellée au condenseur 5 par un tube 8 en cuivre recuit soudé à ses deux extrémités, de préférence par soudure à l'argent.

L'évaporateur 4 est relié et scellé au condenseur 5 par un tube 9 en cuivre recuit soudé à ses deux extrémités, de préférence par soudure à l'argent.

La boucle thermique 2 de génération de chaleur est ainsi réalisée selon l'invention sous forme d'une boucle scellée, sans aucun raccord, de manière à éviter tout risque de fuite ou de pollution du circuit de fluide calorique.

Des supports 10 et 11 extérieurs au mur M du bâtiment sont prévus pour la fixation de l'évaporateur, tandis que des supports 12 et 13 ou tirefonds intérieurs au mur M du bâtiment sont prévus pour la fixation de la cuve 1 de chauffe-eau.

Les supports 10, 11, 12 et 13 sont disposés au voisinage d'un passage 14 de faible diamètre réalisé par trépanage dans un mur M du bâtiment.

Le passage 14 est réalisé de préférence à l'aide d'un trépan pour ventouse, habituellement utilisé par les installateurs de chauffage domestique, à un emplacement voisin de l'emplacement choisi pour poser la boucle thermique 2 de génération de chaleur.

Dans ce mode de réalisation du passage 14, le diamètre du passage 14 réalisé à l'aide d'un trépan pour ventouse est voisin de 130 mm.

Ce diamètre du passage 14 permet d'y insérer un évaporateur 4 inscriptible dans un cylindre circulaire de 130 mm de diamètre.

La boucle thermique 2 de génération de chaleur est montée sur un support 15 prolongé par un tube 16 dans lequel l'évaporateur 4 est inséré et par un moyen d'accrochage 17 supportant la bride ou porte 6 d'obturation sur laquelle le condenseur 5 est fixé : ce montage assure ainsi la compacité de la boucle thermique 2 de génération de chaleur et évite toute contrainte et toute fatigue indésirable aux tubes de liaison 7 à 9 reliant les composants 3 à 5 de la boucle thermique 2 de génération de chaleur.

Sur la figure 2, dans une première étape de pose de l'installation thermique selon l'invention, on fixe le support 15 au mur M du bâtiment, en insérant le tube 16 à travers le passage 14 pratiqué dans le mur M du bâtiment.

Dans cette position, le condenseur 5 reste solidaire du support 15 et la pompe à chaleur 3 est maintenue en position par rapport au mur M du bâtiment, à une hauteur déterminée par la géométrie de son support 15 prolongé par le tube 16 de maintien et de protection de l'évaporateur 4 qui y est inséré.

Les tubes 7 et 9 en cuivre recuit sont des tubes flexibles en extension et sont de préférence formés et moulés en hélice extensible et déformable sur une longueur suffisante pour permettre la passage de l'évaporateur 4 à travers le mur M du bâtiment, et sa fixation sur les supports 10 et 11 prévus à cet effet.

Après avoir assuré le passage de l'évaporateur 4 à travers le mur M du bâtiment, on termine la fixation des composants 3 et 4 de la boucle thermique scellée 2 de génération de chaleur.

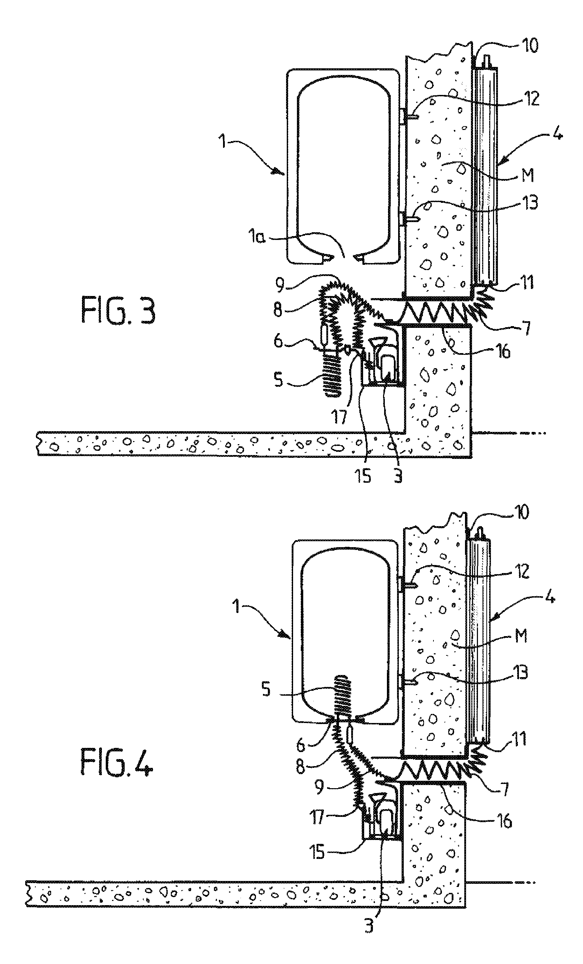

Sur la figure 3, dans une deuxième étape de pose de l'installation thermique selon l'invention, après avoir terminé la fixation du support 15 au mur M du bâtiment et la fixation de l'évaporateur 4 aux supports 10 et 11, on positionne la cuve 1 de chauffe-eau au-dessus du support 13 et de la pompe à chaleur.

On fixe ensuite la cuve 1 de chauffe-eau au mur M du bâtiment, avec son ouverture 1a orientée vers le bas en direction du support 15 et de la pompe à chaleur 3, à l'aide de supports ou tirefonds 12 et 13.

Sur la figure 4, on décroche le condenseur 5 et la bride ou porte 6 d'obturation de son moyen d'accrochage 17 pour les faire pivoter d'un demi-tour et les positionner dans l'ouverture 1a de la cuve 1 de chauffe-eau.

Pour permettre le pivotement et le déplacement de la bride ou porte 6 d'obturation portant le condenseur 5, on prévoit que les tubes 8 de liaison à la pompe à chaleur 3 et 9 de liaison à l'évaporateur 4 sont des tubes flexibles en cuivre recuit, éventuellement enroulés et formés en spirale ou en hélice déformable.

Après positionnement et fixation étanche de la bride 6 ou porte de fermeture dans l'ouverture 1a de la cuve 1, le condenseur 5 monté sur la bride ou porte 6 est immergé à l'intérieur de la cuve 1 de chauffe-eau.

En fin de pose, sur la figure 4, la pompe à chaleur 3 est en position basse de la boucle thermique 2 de génération de chaleur, en étant reliée à travers le mur M du bâtiment à l'évaporateur 4 et au condenseur 5 immergé à l'intérieur de la cuve 1 de chauffe-eau.

Dans ce mode de réalisation, l'évaporateur 4 présente de préférence une conformation cylindrique avec une section droite en forme d'étoile à plusieurs branches, afin de présenter, dans un volume réduit, une grande surface d'échange avec l'air, comparable avec l'art antérieur.

L'invention décrite en référence à un mode de réalisation particulier n'y est nullement limitée, mais couvre au contraire toute modification de forme et toute variante de réalisation dans le cadre et l'esprit de l'invention, l'essentiel étant que la boucle thermique de génération de chaleur soit une boucle scellée sans raccords.

Ainsi, la disposition relative, intérieure ou extérieure, des composants 3 à 5 et des tubes 7 à 9 peut être modifiée à volonté. Egalement, l'application ou l'utilisation de l'installation selon l'invention peut être modifiée à volonté pour réchauffer un autre fluide que l'eau sanitaire ou pour mettre en oeuvre un autre procédé thermique.

## Revendications

1. Installation thermique pour le chauffage de l'eau, notamment pour produire de l'eau chaude sanitaire, du type comportant une pompe (3) à chaleur, un évaporateur (4) et un condenseur (5) reliés entre eux pour former une boucle (2) thermique de génération de chaleur, **caractérisée par le fait que** la boucle (2) thermique de génération de chaleur est une boucle (2) scellée, sans aucune connexion démontable, de manière à éviter tout risque de fuite ou de pollution du circuit de fluide calorique.

2. Installation selon la revendication 1, **caractérisée par le fait que** les éléments (3-5, 7-9) de la boucle (2) thermique de génération de chaleur sont reliés entre eux par des soudures à l'argent, sans aucune connexion démontable.

3. Installation selon la revendication 1 ou la revendication 2, **caractérisée par le fait que** l'évaporateur (4) présente une conformation cylindrique allongée inscriptible dans un cylindre circulaire de 130 mm de diamètre.

4. Installation selon la revendication 3, **caractérisée par le fait que** la conformation cylindrique de l'évaporateur (4) présente une section droite en forme d'étoile à plusieurs branches.

5. Installation selon la revendication 3 ou la revendication 4, **caractérisée par le fait que** l'évaporateur (4) est installé verticalement à l'extérieur d'un bâtiment, tandis que les autres éléments (3, 5) de la boucle thermique de génération de chaleur sont situés, au moins partiellement, à l'intérieur du bâtiment et **par le fait que** les tubes (7, 9) conduisant le fluide calorique à travers un mur (M) ou une paroi du bâtiment sont formés et enroulés en hélice extensible et déformable.

6. Installation selon l'une quelconque des revendications précédentes, comportant une cuve (1) ou une réserve d'eau chauffée, **caractérisée par le fait que** le condenseur (5) est immergé à l'intérieur de la cuve (1) ou réserve d'eau.

7. Installation selon la revendication 6, comportant une cuve (1) de chauffe-eau obturable par une bride ou porte, **caractérisée par le fait que** le condenseur (5) est monté sur la bride ou porte (6) de fermeture de la cuve (1) de chauffe-eau.

8. Installation selon l'une quelconque des revendications précédentes, **caractérisée par le fait que** chaque tube (8) conduisant le fluide calorique et reliant la pompe à chaleur (3) au condenseur (5) est au moins en partie flexible.

9. Installation selon l'une quelconque des revendications précédentes, **caractérisée par le fait que** la boucle thermique (2) de génération de chaleur est conformée pour une mise en place au voisinage d'un passage (14) de faible diamètre réalisé par trépanage dans un mur (M).

10. Installation selon la revendication 9, **caractérisée par le fait que** la boucle thermique de régulation comporte une pompe (3) à chaleur installée en position basse à l'intérieur d'un bâtiment et reliée par un passage à travers le mur ou la paroi du bâtiment à un évaporateur (4), d'une part, et à un condenseur (5) situé au-dessus de la pompe à chaleur (3), d'autre part.
